# EUROPEAN PATENT APPLICATION

(11) **EP 4 537 723 A1**
(43) Date of publication of application: **16.04.2025**
(21) Application number: 24205729.7
(22) Date of filing: 10.10.2024
(51) Int. Cl.: A47J 37/07

(54) **GAS BARBECUE WITH MECHANICAL THERMOSTAT**

(30) Priority: 10.10.2023 IT 202300021084
(71) Applicant: TMC S.R.L., 37013 Caprino Veronese, Verona (IT)
(72) Inventor: CRISTINI, Matteo, I-37013 Caprino Veronese, VERONA (IT)
(74) Representative: Chimini, Francesco

(57) **Abstract**

The barbecue (1), object of the present invention, comprises a frame (11), at least one cooking support (12) supported by the frame (11) and at least one cooking burner (13) suitable for producing a flame that is fed by a fuel gas contained in a tank for generating heat for cooking food placed on the at least one cooking support (12). Furthermore, the barbecue 1 comprises a mechanical thermostat (14) that is suitable for adjusting a passage of fuel gas from the tank to the at least one cooking burner (13) in order to maintain a substantially constant cooking temperature, wherein the mechanical thermostat (14) comprises a knob that may be operated by a user in order to set said cooking temperature.

## Description

This invention relates to a gas barbecue.

In particular, the present invention is in the field of gas barbecues with a system for controlling the cooking temperature.

In the prior art, barbecue solutions equipped with electric or modulating thermostats are known for controlling the cooking temperature.

A typical problem relating to the use of barbecues with an electronic cooking temperature control system is in relation to the need to have a connection to an electric current. The requirement to use an auxiliary electric current does not therefore allow the user to use the barbecue in situations wherein it is not possible to connect to a power socket, such as, for example, in the middle of a meadow in open country, in the mountains or even in domestic outdoor situations wherein power sockets are distant.

A further problem relating to the use of an electric thermostat control system is in relation to the excessive use of fuel gas insofar as it requires the continuous ignition of the flame inside the main burners.

The object of the present invention is to provide a barbecue which solves the drawbacks of the prior art whilst taking into account the needs of the sector.

Such object is achieved by the barbecue claimed in claim 1. The dependent claims describe preferred embodiments of the invention. Further features and advantages of the invention will appear more clearly from the following description, given as a non-limiting example in reference to the accompanying figures, wherein:

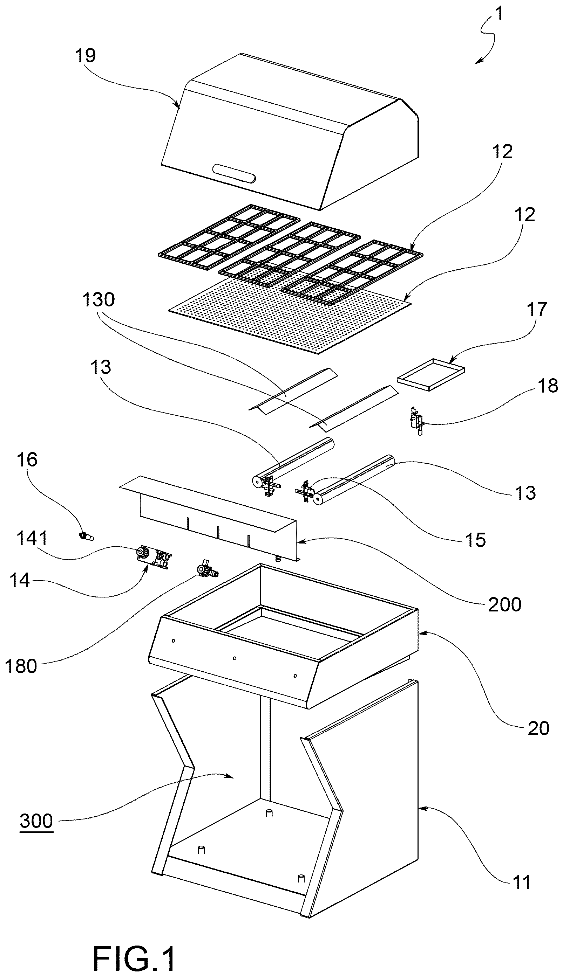

- Figure 1 shows a perspective view in separate parts of a barbecue according to one embodiment;

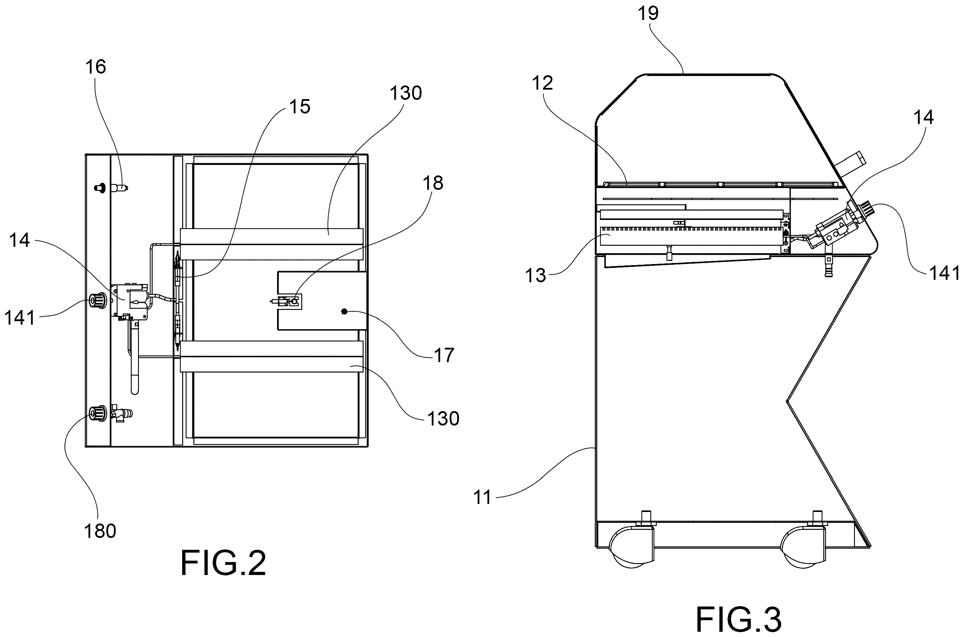

- Figure 2 shows a view from above of a barbecue according to one embodiment;
- Figure 3 shows a side view of a barbecue according to the embodiment shown in Figure 2;

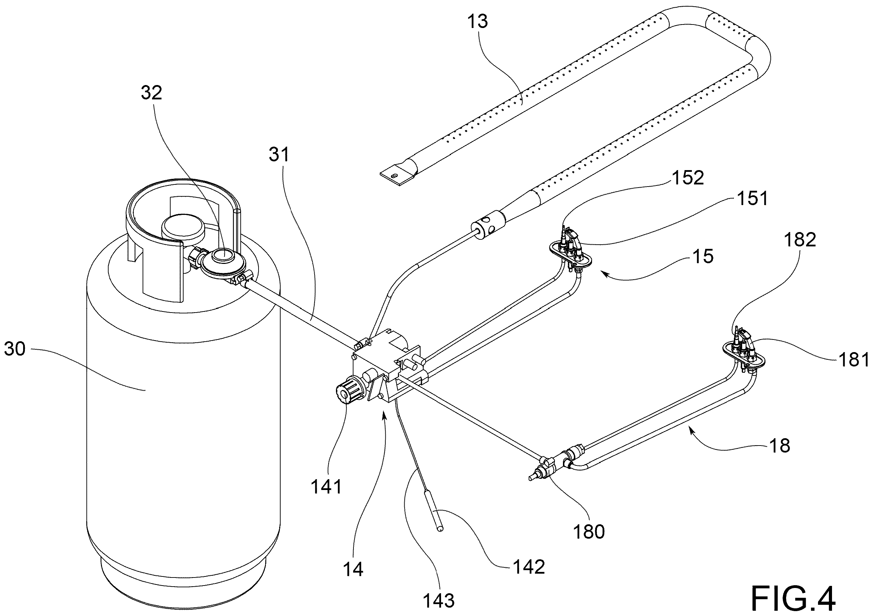

- Figure 4 shows a perspective view of the connection between the components of a barbecue according to one embodiment of the present invention.

With reference to the accompanying figures, a barbecue according to the present invention is indicated in the entirety thereof with the numeral 1.

The barbecue 1 comprises a frame 11.

Furthermore, the barbecue 1 comprises at least one cooking support 12 supported by the frame 11.

According to one embodiment, the at least one cooking support 12 is a drip tray.

According to one embodiment, the at least one cooking support 12 comprises at least one cooking grill. Preferably, the at least one cooking support 12 is a cooking grill. Still preferably, the at least one cooking support 12 is a pair of grilles, a cooking grill and an intermediate grill.

The user has the possibility to change the type of grill in order to perform slow cooking or high cooking temperature grill cooking.

According to a further embodiment, the at least one cooking support 12 is a roasting spit.

According to one embodiment, the barbecue 1 comprises a lid 19 for covering the at least one cooking support 12 when cooking of food.

Advantageously, the lid 19 also has an oven effect upon increasing the cooking temperature.

The barbecue 1 is provided with cooking means 13 suitable for producing a cooking flame fed by a fuel gas, for example contained within a tank 30, in order to generate heat for cooking food placed on the at least one cooking support 12.

According to one embodiment, the cooking means 13 comprise at least one cooking burner.

According to one embodiment, the barbecue 1 comprises at least one cooking burner 13 suitable for producing a cooking flame fed by a fuel gas contained within a tank 30 in order to generate heat for cooking food placed on the at least one cooking support 12.+

In one embodiment, the barbecue 1 is provided with two cooking burners 13, which are parallel to and spaced apart therebetween.

According to a further embodiment, the barbecue 1 is provided with two or more cooking burners 13, which are parallel to and spaced apart therebetween.

According to one embodiment, the barbecue 1 comprises at least one deflector element 130 placed above the at least one cooking burner 13 in such a way as to protect the cooking flame produced by the at least one cooking burner 13 from products generated by the cooking of foods, for example grease.

Advantageously, the at least one deflector element 130 protects the food from the cooking flame generated by the at least one cooking burner 13. In other words, the cooking flame generated by the at least one cooking burner 13 does not come into contact with food that is being cooked, thus avoiding any unexpected burns.

According to one embodiment, the barbecue 1 further comprises a drip tray that is suitable for collecting the products that are generated by cooking foods.

The drip tray may be placed below the at least one cooking support 12 and/or the cooking means 13.

According to one embodiment, the drip tray is placed below the at least one cooking support 12.

According to a further embodiment, the drip tray is placed below the at least one cooking burner 13.

According to a third embodiment, the drip tray is positioned both below the at least one cooking support 12 and below the at least one burner 13.

In one embodiment, the barbecue 1 is provided with two deflector elements 130 placed above the two cooking burners 13.

According to a further embodiment, the barbecue 1 comprises at least one pilot flame burner 15 that is suitable for generating a pilot flame 151 to initiate the combustion of the fuel gas when drawn from the tank 30.

According to a preferred embodiment, the barbecue 1 comprises at least one pilot flame burner 15 that is suitable for generating a pilot flame for igniting the cooking flame produced by the at least one cooking burner 13.

According to one embodiment, the at least one pilot flame burner 15 comprises a temperature sensor 152 that is suitable for monitoring the temperature of the pilot flame 151.

The temperature sensor 152 is preferably a thermocouple.

In one embodiment shown in the figures, the barbecue 1 is provided with a pilot flame burner 15 for each cooking burner 13.

According to one embodiment, the at least one pilot flame burner 15 is only operable by a pilot flame control element 16 that is controllable by the user.

According to one embodiment, the pilot flame control element 16 is a piezoelectric element.

According to one embodiment, the frame 11 defines a compartment 300 that is suitable for accommodating the tank 30 for the fuel gas. In other words, the tank 30 is accommodated within the compartment 300 defined by the frame 11.

In other embodiments, the tank 30 for the fuel gas is external to the barbecue 1 and may be connected to the burners, for example by means of a gas supply pipe, in such a way as to reduce the overall dimensions of the barbecue 1.

In further embodiments, the barbecue may be equipped with more than one tank, for example two, a first tank 30 accommodated by the compartment 300 defined by the frame 11 and a second tank that is external to the barbecue 1.

According to one embodiment, the tank 30 comprises a pressure regulator 32 placed at a tank outlet end in such a way as to adjust the pressure of the gas exiting the tank 30.

The barbecue 1 is provided with a mechanical thermostat 14 that is suitable for controlling the passage of the fuel gas from the tank 30 to the at least one cooking burner 13 to maintain a substantially constant cooking temperature.

According to one embodiment, the tank 30 is connected to the mechanical thermostat 14 by means of a gas supply tube 31.

The mechanical thermostat 14 comprises a knob 141 that is operable by the user in order to set the cooking temperature.

In one embodiment, the mechanical thermostat 14 is of the gas expansion type, i.e., it comprises a bulb 142 containing a thermostat fluid that expands with heat, for example kerosene. According to such an embodiment, the bulb 142 is connected to the thermostat 14 by means of a capillary thermostat bulb 143.

In a known manner, the heat produced by the at least one cooking burner 13 causes a valve for regulating the flow of the fuel gas of the thermostat to open or close. For example, the fuel gas flow adjustment valve is a normally open valve that closes when the temperature of the at least one burner is higher than the cooking temperature set by means of the mechanical thermostat 14.

According to one aspect of the invention, when the cooking temperature is higher than the preset cooking temperature, the valve for regulating the flow of the fuel gas closes thereby preventing the flow of the fuel gas to the at least one cooking burner 13.

Contrary to that which occurs in known barbecues, the pilot flame 151 generated by the at least one pilot flame burner 15 remains lit. As a matter of fact, the management of the pilot flame 151 is independent of the management of the switching on or off of the at least one cooking burner 13.

According to a preferred embodiment, when the cooking temperature is higher than the cooking temperature pre-set by the user, the at least one cooking burner 13 is extinguished by the mechanical thermostat 14, whilst the at least one pilot flame burner 15 remains active in order to keep the pilot flame 151 lit.

Therefore, the barbecue according to the present invention has a cooking temperature regulator system which is independent of the system for igniting or extinguishing the pilot flame.

According to one aspect of the invention, the cooking temperature regulator system comprises the mechanical thermostat 14 and the at least one cooking burner 13.

According to a preferred embodiment, the switching on or off of the at least one cooking burner 13 is adjusted by the mechanical thermostat 14.

According to that which has been described above, the mechanical thermostat 14 is an intermittent mechanical thermostat, i.e., the thermostat is based upon a two-state operation, an ON state and an OFF state, based upon the heat produced by the at least one cooking burner which determines the closure and consequent opening of the valve for regulating the flow of fuel gas.

The operation of the barbecue with a mechanical thermostat 14 requires the user to set the cooking temperature on the mechanical thermostat 14 by means of the knob. Once the cooking temperature has been set, the user actuates the at least one pilot flame burner 15 by means of the piezoelectric element 16 in such a way as to generate the pilot flame 151. The pilot flame 151 allows the combustion of the fuel gas to start inside the at least one cooking burner 13. A flame is therefore generated inside the at least one cooking burner 13, which is fed by the fuel gas contained within the tank. The flame generated inside the at least one cooking burner 13 generates the heat necessary to heat and/or cook the food placed on the at least one cooking support 12. The heat produced by the flame of the at least one cooking burner 13, when it exceeds a threshold value preset by the user, triggers the activation of the thermostat and thus the interruption of the passage of the fuel gas towards the cooking burner 13.

The mechanism for regulating the cooking temperature by means of the mechanical thermostat 14 allows a constant cooking temperature to be maintained inside the barbecue. As a matter of fact, the temperature regulator system always keeps the pilot flame of the at least one pilot flame burner 15 lit and switches on and off the at least one cooking burner 13 based upon the preset cooking temperature, which is monitored by the mechanical thermostat 14.

The temperature regulator system makes it possible to set a cooking temperature and to control the switching on or off of the at least one cooking burner 13.

According to a preferred embodiment, the at least one pilot flame burner 15 is only operable by the piezoelectric element 16 which is controllable by the user. Therefore, the actuation of the at least one pilot flame burner 15 is independent of the cooking temperature regulator system.

As a matter of fact, if the cooking temperature is lower than the temperature set by the user, the temperature regulator system keeps the at least one cooking burner 13 lit. Conversely, if the cooking temperature is greater than the temperature set by the user, the regulatore system extinguishes the at least one cooking burner 13 in such a way as to return the cooking temperature to below the preset threshold value.

According to the present invention, in a configuration wherein the cooking temperature is higher than the cooking temperature pre-set by the user, the pilot flame 151 of the at least one pilot flame burner 15 remains lit when the at least one cooking burner 13 is extinguished. Therefore, from the time the pilot flame 151 is generated by the user's command at the start of the cooking, when the cooking temperature is higher than the temperature pre-set by the user by means of the knob 141, the at least one cooking burner 13 is off and the pilot flame is lit.

At the end of the cooking, the user turns off the at least one pilot flame burner.

The temperature regulator system according to the present invention makes it possible to reduce the ignition time of the at least one cooking burner whilst maintaining a constant cooking temperature throughout the cooking of the food.

Advantageously, insofar as because the pilot flame is always lit, with the barbecue according to the present invention the ignition of the at least one cooking burner is substantially immediate. Therefore, once the mechanical thermostat control valve returns to the normal open position, the fuel gas flows from the tank to at least one cooking burner which, by means of the pilot flame, ignites, thereby producing the heat necessary for cooking.

Advantageously, the barbecue according to the present invention has reactive cooking temperature control, being able to adapt quickly to changes in the cooking temperature.

The use of the mechanical thermostat 14, which allows the desired cooking temperature to be set and kept constant during the use of the barbecue, allows for both high-temperature cooking, for example grill cooking, and low-temperature cooking for prolonged periods, for example slow cooking.

Furthermore, the use of a mechanical thermostat 14 allows for both the heating, for example at a cooking temperature of between 50-250 °C, and the cooking and browning of the food placed on the at least one cooking support 12.

Advantageously, the use of the mechanical thermostat allows the desired cooking temperature to be kept constant.

Advantageously, the use of the mechanical thermostat saves the fuel gas necessary for cooking food insofar as, given the intermittent adjustment of the adjustment valve, there are periods of time wherein the flame inside the at least one cooking burner 13 is not fed by the fuel gas.

Advantageously, the use of the mechanical thermostat does not require an auxiliary electric current, unlike known barbecue systems equipped with electric thermostats.

In one embodiment, the barbecue 1 comprises at least one smoking fuel container 17 that is suitable for containing a smoking fuel, preferably organic fuel, suitable for being heated in order to smoke the dishes upon the cooking support 12.

According to one embodiment, the smoking fuel is, for example, pellets for food use, chips, sawdust, pieces of wood or the like.

The at least one smoking fuel container 17 is placed so as to be in communication with the at least one cooking support 12.

According to one embodiment, the barbecue comprises smoking fuel heating means 18 suitable for heating the smoking fuel contained in the respective container 17 so as to produce smoke that is suitable for smoking the food place on the at least one cooking support 12.

In one embodiment, the smoking fuel heating means 18 comprise at least one cooking torch 181 or else a burner, or the like.

According to one embodiment, the smoking fuel heating means 18 comprise a smoking temperature sensor 182 that is suitable for monitoring the smoking temperature generated by the at least one blowtorch 181 or else by a burner.

Preferably, the temperature sensor 182 is a thermocouple.

For example, the smoking fuel heating means 18 are operable by the user by means of a respective smoke valve 180.

Once activated, the smoking fuel heating means 18 emit heat in such a way as to heat the smoking fuel pellet contained within the smoking fuel container 17. This smoking fuel, once a predetermined temperature has been reached, produces smoke that is suitable for smoking food placed on the at least one cooking support 12 in such a way as to confer thereto a smoked effect.

In accordance with that which has been described above, the smoking fuel heating means 18, the relative valve 180 and the fuel contained within the smoking fuel 17 container constitute a smoking system.

It should be noted that in one embodiment, the amount of smoke produced for generating the smoked effect depends upon the amount of fuel inserted into the smoking fuel 17 container.

According to one embodiment, the at least one smoking fuel 17 container is housed in the compartment 300 underneath the at least one cooking support 12 in such a way that the smoke produced by the heated fuel substantially directly impacts the food placed on the at least one cooking support 12.

According to one embodiment, the barbecue 1 comprises a control panel 20 which renders the piezoelectric element 16 accessible to the user for activating the pilot flame burner, the mechanical thermostat 14 and the smoke valve 180. According to such an embodiment, the barbecue is provided with a control panel cover 200 for protecting the control panel 20 from external agents such as, for example, rain, humidity, dirt or food residues.

Innovatively, the barbecue fully fulfills the intended object by overcoming the typical problems of the prior art.

It is clear that a person skilled in the art may make changes to the invention described above in order to meet contingent needs, which changes all fall within the scope of protection as defined in the following claims.

## Claims

1. A barbecue (1) comprising:
- a frame (11);
- at least one cooking support (12) supported by the frame (11);
- at least one cooking burner (13) suitable for producing a cooking flame fed by a fuel gas contained in a tank (30) for generating heat for cooking food placed on the at least one cooking support (12);
- a mechanical thermostat (14) suitable for adjusting a passage of fuel gas from the tank to the at least one cooking burner (13) to maintain a cooking temperature pre-set by the user, for example by means of a thermostat knob.

2. Barbecue (1) according to claim 1, comprising at least one pilot flame burner (15) suitable for generating a pilot flame 151 for igniting the cooking flame produced by the at least one cooking burner (13).

3. Barbecue (1) according to claim 2, wherein, when the cooking temperature is higher than the cooking temperature pre-set by the user, the at least one cooking burner (13) is extinguished by the mechanical thermostat (14), whilst the at least one pilot flame burner (15) remains active in order to keep the pilot flame 151 lit.

4. Barbecue (1) according to claim 3, wherein the at least one pilot flame burner (15) is exclusively operable by a pilot flame control element (16) that is controllable by the user.

5. Barbecue (1) according to claim 4, wherein the pilot flame control element (16) is a piezoelectric element.

6. Barbecue (1) according to any one of the preceding claims, comprising at least one smoking fuel container (17) suitable for containing a smoking fuel placed so as to be in communication with the at least one cooking support (12), and wherein the barbecue further comprises smoking fuel heating means (18), such as a cooking torch or burner, suitable for heating the smoking fuel contained in the smoking fuel container (17) so as to produce smoke suitable for smoking the food placed on the at least one cooking support (12).

7. Barbecue (1) according to claim 6, comprising a smoking valve (180) operable by the user to activate the smoking fuel heating means (18).

8. Barbecue (1) according to any one of the preceding claims, wherein the mechanical thermostat (14) is a gas expansion thermostat.

9. Barbecue (1) according to any one of the preceding claims, comprising a lid (19) to cover the at least one cooking support (12) when cooking food.

10. Barbecue (1) according to any one of the preceding claims, wherein the mechanical thermostat (14) is adjustable so as to set the cooking temperature in a temperature range between a lower temperature for heating food only and a higher temperature suitable for cooking and/or browning of food.

11. Barbecue (1) according to any one of the preceding claims, wherein the tank is housed in a tank compartment (300) defined by the frame (11).

12. Barbecue (1) according to any one of the claims from 1-10, comprising connection means of the cooking means (13) to a fuel tank outside the barbecue.

13. Barbecue (1) according to any one of the preceding claims, comprising a drip tray placeable below the at least one cooking support (12) and/or the cooking means (13) .
